(19) Europäisches Patentamt
European Patent Office
Office européen des brevets

(11) **EP 3 095 769 A1**

(12) **EUROPEAN PATENT APPLICATION**

(43) Date of publication:
**23.11.2016 Bulletin 2016/47**

(51) Int Cl.:
***C04B 28/04*** *(2006.01)*     ***C04B 28/06*** *(2006.01)*

(21) Application number: **16170691.6**

(22) Date of filing: **20.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.05.2015 ES 201530713**

(71) Applicant: **Arraela, S.L.**
**15621 Coruña (ES)**

(72) Inventor: **CARUNCHO RODADO, JUAN MANUEL**
**15621 LA CORUÑA (ES)**

(74) Representative: **Del Valle Valiente, Sonia**
**C/ Miguel Angel Cantero Oliva, 5,53**
**28660 Boadilla del Monte-Madrid (ES)**

(54) **MASS PREPARATION FOR THE MANUFACTURE OF TECHNICAL CONCRETES FOR SHIELDING AGAINST RADIATION AND METHOD TO OBTAIN SAID PREPARATION**

(57) Mass preparation for the manufacture of technical concretes for shielding against radiation, of the type comprising a mixture of cement, aggregates and water; wherein the cement comprises aluminous cement and/or Portland type cement, while the aggregates comprise slag from metallurgy foundry castings. The method for obtaining said preparation includes the analysis and selection of suitable slag, its filtering and classification, plotting of the Bolomey curve depending on the intended use of the finished concrete, as well as the mixture of elements and their vibration.

EP 3 095 769 A1

**Description**

**OBJECT OF THE INVENTION**

The present invention relates to a mass preparation for the manufacture of structural technical concretes, either in mass or prefabricate, specially designed for the realisation of radiation shields, whether refractory resistant to high temperature or not, and/or for thermal accumulation, usable in the making of supporting structures for radiological spaces or shields for waste containers, that allows the construction of radiological or nuclear containments with adequate security and efficiency. It also relates to a method for obtaining said preparation.

The invention falls generally in the field of building materials.

**BACKGROUND OF THE INVENTION**

Currently, the protection of premises, facilities and waste against the action of radiation requires the use of high density concretes (greater than 3000 Kg/m3), and typically barite concrete, that are capable of attenuating the irradiated particles, that have a high cost and have mechanical strength characteristics similar to those of other concretes like the same type PORTLAND cement, and are capable of better controlling the possible occurrence of micro-cracks in large masses of concrete, due to a better control over curing temperatures.

In general, refractory concretes have the drawback of the appearance of cracks or micro-cracks when subjected to high temperatures. These cracks, even though they do not seriously affect the structural capacity of the material, cause a loss of thermal conductivity due to the breakage of the corresponding thermal bridges, impairing its characteristics of accumulation and manageability of thermal energy, and to a lesser extent the shield.

As a consequence of this, these concretes are being used in most cases merely as structures resistant to high temperatures, and primarily as prefabricated elements for the containment of spaces at high temperatures. Attempts have been made to control this situation by treating the aggregate and the use of additives, arriving at the increase of the mechanical characteristics of the concrete as well as increasing the thermal conductivity and thermal capacity, but without being applied to concretes with capabilities for shielding against radiation.

Therefore, in the state of the art, the lack of refractory shield concretes is evident that, apart from maintaining adequate structural capacities, are able to provide for a high capacity thermal performance, high thermal and electrical conductivity, maintaining appropriate mechanical characteristics, which makes them ideal for the construction of foundations and/or radiologically safety structures.

**DESCRIPTION OF THE INVENTION**

The mass preparation for the manufacture of technical concretes for radiation shields of the invention has a constitution that overcomes the technical problem posed, obtaining a finished concrete with high capacity shielding against gamma particles and neutrons, similar to barite concrete or even higher, depending on the selection, implementation and radiological activity, but at a lower cost, and even improving certain mechanical and/or thermal properties such as:

> compressive strength
> tensile strength
> Young modulus
> transmittance / conductivity
> thermal stress resistance

The finished concrete made from the mass preparation of the invention, therefore, presents considerable improvements from the point of view of the structural and deformational safety, and thermal shielding of, for example, radiological waste containers, being able to be optimised to the temperature ranges in which they will be applied, for example 280 °C, for shielding radioactive waste containers, or any other application at environmental temperature. It also gives a technological outlet to a metallurgy residue.

Other applications of the concrete made from the mass preparation of the invention comprise the realisation of enclosures for radioactive and similar premises, as poured concrete, bricks, tiles, or dry mortar.

The mass preparation for making technical concretes for radiation shields is of the type comprising a mixture of cement, aggregate and water. According to the invention, the cement comprises aluminous cement (with calcium aluminate base) and/or Portland type, while the aggregates comprise principally and usually only, slag from metallurgy foundry castings, and typically selected black slag.

Furthermore, it may comprise additives that vary depending on the characteristics required, such as strength, curing time, protection against freezing and others. It may also comprise the addition of a filler or filling complementary to the aggregates, which provides mechanical strength and, in particular, increases density.

Mainly the Portland type cement is used, although a variant based on aluminous cements can also be made, to create temperature resistant shields, for applications such as the manufacture of containers for radioactive waste - whether for transport or for storage- as well as other applications in which the radioactive element must be adequately confined in a high temperature environment.

The use of smelter slag as a technological aggregate brings great advantages over other natural aggregates, allowing the emergence of a new group of technical concretes optimised for the range of tasks in which must be developed their application and functionality of the same.

The preparation is achieved by the method of the invention, which comprises the following steps:

- analysis of the composition of the slag, wherein, at least, the amounts of the following elements present therein will be identified: FeO, MgO, CaO, and compactness, porosity and degree of crystallinity of the granules. It would also be advisable to identify the amounts of $P_2O_5$, S, $K_2O$, $TiO_2$, $Cr_2O_3$, MnO, and slag basicity,
- selection of slag containing at least 39% by weight of FeO, less than 4% of MgO, and less than 24% of CaO,
- filtering selected slag to obtain the required granulometry,
- slag classification according to its granulometry,
- plotting of the Bolomey curve depending on the intended use of the finished concrete. This curve takes into account the amount of cement as

if it was a fine aggregate and is given by the equation $y = a + (100 - a)\sqrt{\dfrac{d}{D}}$ where $y$ the percentage is by weight of the aggregate passing through each sieve, d is the opening of each sieve, D is the maximum aggregate size and $a$ is a variable parameter depending on the type of aggregate and concrete consistency.

| Type of aggregate | Consistency of concrete | Value of "a" |
|---|---|---|
| Rolled | Dry-plastic | 10 |
| | Soft | 11 |
| | Fluid | 12 |
| Coarse | Dry-plastic | 12 |
| | Soft | 13 |
| | Fluid | 14 |

- mixing the selected slag with aluminous or Portland cement and water in a ratio between 65% and 90% by volume of the dry mix, with deviations of the dry mix with respect to the Bolomey granulometric curve lower than 5% in the thirds of the ends of the curve and lower than 10% in the middle third of the curve,
- vibrated at frequencies greater than 3000 rpm.

Furthermore, additives may be added depending on the characteristics that are required and/or a filler or filling in order to increase the mechanical strength and, in particular, the density.

## PREFERRED MODE FOR CARRYING OUT THE INVENTION

The mass preparation for making technical concretes for radiation shields of the invention is of the type comprising a mixture of cement, aggregate and water. According to the invention, the cement comprises aluminous cement (with calcium aluminate base) and/or Portland type, while the aggregates comprise principally and usually only, slag from metallurgy foundry castings, and typically selected black slag.

Furthermore, it may comprise generally additives to provide strength, protection against freezing, accelerate curing and others. It may also comprise generally the addition of a complementary filler or filling to the aggregates to increase the mechanical strength and/or density.

Within the general scope of the invention, at least the following main variants are provided:

A mass preparation for refractory radiation shielding concrete intended to be used with functional temperatures higher than 250 °C, intended for the manufacture of prefabricated parts comprising, by volume of the preparation:

- aluminous-cement (containing $Al_2O_3$ between 35% and 51%): 9%-19%,
- water: 11 %-21 % (mass ratio water/cement: 0.35-0.45),
- selected aggregates: 70%-80%.

A mass preparation for refractory radiation shielding concrete intended to be used in mass pouring for finished structures with functional temperatures higher than 250 °C, comprising, by volume of the preparation:

- aluminous-cement (containing $Al_2O_3$ between 35% and 51%): 11 %-21 %,
- water: 14%-24%,
- selected aggregates: 65%-75%.

Expressing the amount of aluminous cement in units used in the technical field of application, it would range from 350-450 Kg/m3 of total heavy mass, and the ratio by weight water/cement comprised between 0.28% and 0.40%.

These concretes are suitable for work at high temperatures, as their thermal expansions up to 400 °C are compatible with the dilatations experienced by carbon steel pipes that often traverse the elements made of concrete. Furthermore, if the structure requires, a carbon steel framework of not more than 12 mm can be used. If the frameworks are "skin" this should not exceed 10 mm. Stainless steel pipes in the thermal range up to 600 °C may be lined with dense steel wool and pressed to a maximum thickness of 2 mm, to maintain thermal and mechanical contact.

Portland cement cannot be used at high temperatures, as it dehydrates and begins to lose its mechanical properties at temperatures above 250 °C, but if the concrete is not to be subjected to these high temperatures, Portland type cement should be used.

Therefore, the invention also contemplates main variants of the mass preparation, which are not intended to work at temperatures requiring refractory properties, and that are made with Portland cement, comprising:

A mass preparation for non-refractory radiation shielding concrete intended to be used with functional environmental temperatures, intended for the manufacture of prefabricated parts comprising, by volume of the preparation:

- Portland cement: 5%-15%,
- water: 5%-15%,
- selected aggregates: 80%-90%.

A mass preparation for refractory radiation shielding concrete intended to be used in mass pouring for finished structures with functional environmental temperatures, comprising, by volume of the preparation:

- Portland cement: 8%-28%,
- water: 7%-27%,
- selected aggregates: 65%-85%.

Expressing the amount of Portland cement in units used in the technical field of application, it would range from 290-380 Kg/m3 of total heavy mass and the ratio by weight water/cement would be comprised between 0.3% and 0.55%.

In any variant the preferred granulometry for the mix seeking the greatest radio-protection capacity would be between 0 mm and 22 mm for the manufacture, and the Bolomey curve upper limit plotted should never exceed 25 mm, due to the risk of segregation in the vibration process.

For projected mortars, the preferred granulometry of the mix would be between 0 mm and 2 mm, with maximum aggregate size of 1.3 mm.

Regarding the additives, it is provided that to any of these variants may be added, in addition to the additives generally seen, other additives such as super-plasticizers, self compactants, air entraining agents, water reducers (e.g. derivatives of polyethylene glycol, vinyl, or the like), which act as deflocculants for this type of cements. Other additives may be metal fibre, plastic or polymer fibres, curing inhibitors, etc. as recommended by the respective manufacturers based on the final design of the fabricate and the onsite laying conditions, in proportions of less than 1%. Typically, preparations based on Portland cement will use super plasticizer additives, and those preparations based on aluminous cements will use plasticizing additives and curing inhibitors. As far as additives based on plastic fibres such as polypropylene fibres are concerned, they generally improve the mechanical properties, and also in high temperature uses, generate outlet channels for subsequent humidities.

Also these variants in particular may comprise a filling or filler based on aggregates such as minerals with high iron content, for example magnetite and/or hematite and/or iron shot of very fine granule size (comprised between 60-120

$\mu$m) in maximum ratio of 10% by volume of the mixture, in order to increase the mechanical strength and, in particular, the density to within the ratios indicated in the claims of the present invention. This ratio will be substitute for the ratio of aggregates, in such a way that the inclusion of a certain percentage by volume of filler will involve the decrease of the same percentage of aggregate in the previous ratios.

Additionally these variants may in particular include nano-particles (between 60 $\eta$m and the 400 $\eta$m) composed of oxides and metal alloys consisting mostly of Fe, Mg and Zn, with traces of Si, Ni, S, K, Ca, and Cr, different forms of crystallization, in a proportion of less than 3% by volume of the mixture. It gives compaction, increase of the mechanical properties, impermeability, and better adhesion when used as mortar, workability and an improvement in the ability to shield. Except that, if it is required to improve any of the aforementioned parameters, in which case different fractions would have to be tried depending on the granulometric curve of the main aggregate, and the "weight" of each parameter on the list of the minimums required. The optimum on average to obtain a balanced improvement, is the use of this material at 1% by volume of the mixture. It is necessary to be cautious and prudent in the addition of nano-particles addition since it will require more water, and therefore, greater super-plasticizer which increase the heat generation and the possible emergence of micro-cracks although it gains in workability.

Below a few tables are shown that express in a concrete way the amounts of the various components, in the units in which they are normally expressed in the industry and in the various regulations, therefore, some of the amounts are indicated as percentage by volume and others as percentage by weight.

Concrete in range of environmental temperatures for prefabricates

| Component | % Volume | Observations |
|---|---|---|
| Portland cement | 5-15 | |
| Water | | 0.3-0.45 (water/cement ratio) |
| Selected aggregates | 80-90 | |
| Additives | * | Super-plasticizers |
| Filling aggregates (Filler) | | Less than 10% of the fine fraction of the aggregate |

Concrete in range of environmental temperatures for mass pourings

| Component | % Volume | Observations |
|---|---|---|
| Portland cement | 8-28 | |
| Water | | 0.45-0.55 (water/cement ratio) |
| Selected aggregates | 65-85 | |
| Additives | * | Super-plastificizers |
| Filling aggregates (Filler) | | Less than 10% of the fine fraction of the aggregate |

Concrete with refractory characteristics for prefabricates

| Component | % Volume | Observations |
|---|---|---|
| Aluminous Cement | 9-12 (19) | |
| Water | | 0.3-0.45 (water/cement ratio) |
| Selected aggregates | 70-80 | |
| Additives | * | Plasticizers and curing inhibitors |
| Filling aggregates (Filler) | | Less than 10% of the fine fraction of the aggregate |

Concrete with refractory characteristics for mass pourings

| Component | % Volume | Observations |
|---|---|---|
| Aluminous Cement | 11-13 (21) | |
| Water | | 0.45-0.55 (water/cement ratio) |
| Selected aggregates | 65-75 | |
| Additives | * | Plasticizers and curing inhibitors |
| Filling aggregates (Filler) | | Less than 10% of the fine fraction of the aggregate |

(*) Super-plasticizing additives, self compactants, air entraining agents, metallic fibre, plastic or polymer fibres, curing inhibitors, etc. as recommended by the respective manufacturers based on the final design of the fabricate and the onsite laying conditions.

The preparation is achieved by the method of the invention, which comprises the following steps:

- analysis of the composition of the slag, wherein, at least, the amounts of the following elements present therein will be identified: FeO, MgO, CaO, and compactness, porosity and degree of crystallinity of the granules. It would also be advisable to identify the amounts of $P_2O_5$, S, $K_2O$, $TiO_2$, $Cr_2O_3$, MnO, and slag basicity,
- selection of slag containing at least 39% by weight of FeO, less than 4% of MgO, and less than 24% of CaO,
- filtering of the selected slag,
- slag classification according to its granulometry,
- plotting of the Bolomey curve depending on the intended use of the finished concrete,
- mixing the selected slag with aluminous or Portland cement and water in a proportion between 65% and 90% of the total volume of the dry mix, with deviations of the dry mix with respect to the Bolomey granulometric curve lower than 5% in the thirds of the ends of the curve and lower than 10% in the middle third of the curve,
- vibration at frequencies greater than 3000 rpm (recommended in the vicinity of 7000 rpm).

Furthermore, additives may be added depending on the characteristics that are required and/or a filler or filling in a maximum proportion of 10% by volume in order to increase the mechanical strength and, in particular, the density.

The vibration is performed in maximum pulses of 5-10 seconds depending on the size of the aggregate (a larger aggregate less vibration time) (it must be implemented in short pulses to avoid segregation of the coarse aggregate).

The analysis of the composition and granulometry of the slags is performed by spectrophotometry X ray, or other method that gives similar information, in order to obtain a profile of components that allows to discern whether the casting, which are usually around 20 TM depending on the type of oven, is suitable for some applications in the nuclear field.

classification according to their granulometry is performed according to the following criteria:

- Sands: size <6 mm
- Medium aggregates: between 6 and 12 mm
- Coarse aggregates: between 12 and 25 mm Exceptionally 30 mm may be reached in units of mass concrete work of high volume.

The selection of the aggregate so that it contains at least 39% by weight of FeO and less than 4% MgO, is needed to achieve adequate shielding and thermal accumulation characteristics: the finished concrete should be heavy and with good mechanical stability. The MgO content is directly related to the volumetric stability. A too high content of Magnesium (MgO) as Periclase jeopardizes the stability. These crystals react with water and in the medium and long term, can cause internal stresses in the hardened concrete. Furthermore, it must be controlled that the CaO content is below 24% by weight to optimise the mechanical stability of the concrete.

With respect to compactness, porosity and degree of crystallinity of the granules, they are parameters that depend on the slag cooling method. If the slag is poured directly onto the floor of the mill and then watered with water to proceed to its cooling, it will have a porous and glassy appearance. If the pouring is performed in a cinder dumper or foundry cone, cooling is slower and never watered, and once cooled and extracted a hard and crystalline compact material with low porosity can be appreciated, which is preferred for use as the main aggregate in the use of the mass preparation for nuclear shielding concretes of the invention.

In the case of making prefabricated blocks with this concrete, i.e. concrete pieces manufactured in moulds, not in mass, the dosage should be adapted so that the maximum granulometry of the aggregate in these circumstances should be between half and a third of the smallest dimension of the prefabricate, with a maximum of 25 mm. It should be noted that the productions of prefabricated modules are made, at least with vibro compression.

It has also been found that, modifying the ratio between fine and coarse aggregates, the modification of the thermal properties of the material (e.g. thermal conductivity) may be achieved to suit its use in different temperature ranges and performances, and even other properties such as electrical conductivity, aspects to be taken into account in the design of shielding waste containers.

The Bolomey grading curve is plotted for each application, and unlike those based on other theories, such as that of Fuller, it does consider the cement as if it were one more aggregate, which allows for better results. The maximum deviations indicated above regarding the determined Bolomey curves determined ensure optimum performance of the finished concrete.

Varying the proportion between the amounts of sand, medium aggregates and coarse aggregates allows modifying the properties of the resulting material to adapt its use at different temperatures, and better meet the objective of application required. Indeed, it has been found that a high percentage of fine aggregates contributes to greater compaction of the mix, and therefore a higher thermal conductivity. This advantage of compaction occurs when what is sought are concretes with high shielding ability, therefore, care must be taken so that their use does not decrease the density of the fabricate.

**Claims**

1. A mass preparation for the manufacture of technical concretes for shielding against radiation, of the type comprising a mixture of cement, aggregates and water; **characterised in that** the cement comprises aluminous cement and/or Portland type cement, while the aggregates comprise slag from metallurgy foundry castings.

2. The mass preparation for the manufacture of technical concretes for shielding against radiation, according to Claim 1, **characterised in that** the selected aggregates comprising black slag.

3. The mass preparation for the manufacture of technical concretes for shielding against radiation, according to any of the preceding claims, **characterised in that** it further comprises a filling with properties for increasing mechanical strength and/or density.

4. The mass preparation for the manufacture of technical concretes for shielding against radiation, according to any of the preceding claims, **characterised in that** it comprises a preparation to be used with functional temperatures higher than 250 °C, and to be used in the manufacture of prefabricated pieces comprising, by volume of the preparation:

   - aluminous cement 9%-19%,
   - water: 11 %-21 %,
   - selected aggregates: 70%-80%.

5. The mass preparation for the manufacture of technical concretes for shielding against radiation, according to any of Claims 1 to 3, **characterised in that** it comprises a preparation to be used in mass pourings for finished constructions with functional temperatures higher than 250 °C, the preparation by volume comprising:

   - aluminous cement 11 %-21 %,
   - water: 14%-24%,
   - selected aggregates: 65%-75%.

6. The mass preparation for the manufacture of technical concretes for shielding against radiation, according to any of Claims 1 to 3, **characterised in that** it comprises a non-refractory preparation, to be used with functional environmental temperatures, for the manufacture of prefabricated pieces comprising, by volume of the preparation:

   - Portland cement: 5%-15%,
   - water: 5%-15%,
   - selected aggregates: 80%-90%.

7. The mass preparation for the manufacture of technical concretes for shielding against radiation, according to any of the Claims 1 to 3, **characterised in that** it comprises a non-refractory preparation, to be used in mass pourings for finished constructions with functional environmental temperatures comprising, by volume of the preparation:

- Portland cement: 8%-28%,
- water: 7%-27%,
- selected aggregates: 65%-85%.

8. The mass preparation for the manufacture of technical concretes for shielding against radiation, according to any of Claims 4 to 7, **characterised in that** in the aggregates is comprised a filling based on mineral aggregates of high iron content of very fine granule size, in maximum proportion of 10% by volume of the mixture; and **in that** said filler comprises magnetite and/or hematite and/or iron shot.

9. The mass preparation for the manufacture of technical concretes for shielding against radiation, according to any of Claims 4 to 8, **characterised in that** it further comprises nano-particles of a size between 60 $\eta$m and 400 $\eta$m composed of oxides and metal alloys in proportion of less than 3% by volume of the mixture.

10. The mass preparation for the manufacture of technical concretes for shielding against radiation, according to Claim 9, **characterised in that** it comprises nano-particles composed of oxides and metal alloys in a proportion of 1% by volume of the mixture; and **in that** the nano-particles comprise nano-particles of Fe, Mg and Zn, with traces of Si, Ni, S, K, Ca and Cr, with different forms of crystallization.

11. A method for obtaining a mass preparation for the manufacture of technical concretes for shielding against radiation, **characterised in that** comprising the following steps:

- analysis of the composition of the slag from metallurgy foundry castings, wherein, at least, the amounts of the following elements present therein will be identified: FeO, MgO, CaO, and compactness, porosity and degree of crystallinity of the granules,
- selection of slag containing at least 39% by weight of FeO, less than 4% of MgO, and less than 24% of CaO,
- filtering of the selected slag,
- slag classification according to its granulometry,
- plotting of the Bolomey curve depending on the intended use of the finished concrete,
- mixing the selected slag with aluminous or Portland cement and water in a proportion between 65% and 90% of the total volume of the dry mix, with deviations of the dry mix with respect to the Bolomey granulometric curve lower than 5% in the thirds of the ends of the curve and lower than 10% in the middle third of the curve,
- vibrated at frequencies greater than 3000 rpm.

12. The method for obtaining a mass preparation for the manufacture of technical concretes for shielding against radiation according to Claim 11, **characterised in that** it further comprises the addition of additives and/or a filling in a maximum proportion of 10% by volume.

13. The method for obtaining a mass preparation for the manufacture of technical concretes for shielding against radiation, according to any of Claims 11 or 12, **characterised in that** it comprises a step of selection of aggregates for mass preparations to be used in carrying out in mould cement prefabricates, with granulometry selection of between half and a third of the smallest dimension of the prefabricate, with a maximum of 25 mm.

Europäisches
Patentamt

European
Patent Office

Office européen
des brevets

# EUROPEAN SEARCH REPORT

Application Number

EP 16 17 0691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BANTSIS G ET AL: "Comparison of low cost shielding-absorbing cement paste building materials in X-band frequency range using a variety of wastes", CERAMICS INTERNATIONAL, ELSEVIER, AMSTERDAM, NL, vol. 38, no. 5, 4 January 2012 (2012-01-04), pages 3683-3692, XP028409699, ISSN: 0272-8842, DOI: 10.1016/J.CERAMINT.2012.01.010 [retrieved on 2012-01-12] | 1-7,11 | INV. C04B28/04 C04B28/06 |
| Y | * page 3683, column 2; tables 4,5 * * page 3686, column 1 * | 8-10,12, 13 | |
| X | ZA 9 803 215 A (LEED CLIF JAMES; LEED NATALIE LYNETTE TIRA) 31 March 1999 (1999-03-31) * claim 1; example 1 * | 1-3 | |
| X | CN 101 805 156 A (MCC BAOSTEEL TECH SERV CO LTD) 18 August 2010 (2010-08-18) * the whole document * | 1,4-7 | TECHNICAL FIELDS SEARCHED (IPC) |
| | | | C04B |
| Y | M. MASLEHUDDIN ET AL: "Radiation shielding properties of concrete with electric arc furnace slag aggregates and steel shots", ANNALS OF NUCLEAR ENERGY, vol. 53, 1 March 2013 (2013-03-01), pages 192-196, XP055298112, GB ISSN: 0306-4549, DOI: 10.1016/j.anucene.2012.09.006 * table 2 * | 8 | |
| Y | GB 2 449 758 A (HODGKINSON NICHOLAS JOHN [GB]) 3 December 2008 (2008-12-03) * abstract * | 9,10,12, 13 | |

The present search report has been drawn up for all claims

| Place of search | Date of completion of the search | Examiner |
|---|---|---|
| Munich | 12 September 2016 | Roesky, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 0691

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2016

| Patent document cited in search report | | Publication date | Patent family member(s) | | Publication date |
|---|---|---|---|---|---|
| ZA 9803215 | A | 31-03-1999 | NONE | | |
| CN 101805156 | A | 18-08-2010 | NONE | | |
| GB 2449758 | A | 03-12-2008 | GB WO | 2449758 A 2008146044 A1 | 03-12-2008 04-12-2008 |

EPO FORM P0459

For more details about this annex : see Official Journal of the European Patent Office, No. 12/82